# EUROPÄISCHE PATENTSCHRIFT

(11) **EP 2 572 456 B1**
(45) Veröffentlichungstag und Bekanntmachung des Hinweises auf die Patenterteilung: **05.11.2014**
(21) Anmeldenummer: 11715909.5
(22) Anmeldetag: 14.04.2011
(51) Int. Cl.: H04B 3/28, H04B 3/30, H04L 25/02

(54) **VORRICHTUNG ZUR BEREITSTELLUNG EINER EIGENSICHEREN VERSORGUNGSSPANNUNG UND ZUR ÜBERTRAGUNG VON KOMMUNIKATIONSSIGNALEN**
APPARATUS FOR PROVIDING INTRISICALLY SECURE POWER SUPPLY AND FOR TRANSMITTING COMMUNICATION SIGNALS
APPAREIL POUR FOURNIR UNE TENSION D'ALIMENTATION À SÉCURITÉ INTRINSIQUE ET POUR LA TRANSMISSION DE SIGNAUX DE COMMUNICATION

(30) Priorität: 21.05.2010 DE 102010029234
(43) Veröffentlichungstag der Anmeldung: 27.03.2013
(60) Teilanmeldung: 13180711.7
(73) Patentinhaber: Endress+Hauser Flowtec AG, 4153 Reinach (CH)
(72) Erfinder: FINK, Nikolai, 4147 Aesch (DE); BRUDERMANN, Matthias, CH-4313 Moehlin (CH)
(74) Vertreter: Andres, Angelika Maria
(86) Internationale Anmeldenummer: PCT/EP2011/055953
(87) Internationale Veröffentlichungsnummer: WO 2011/144399

(56) Entgegenhaltungen:
- DE-A1-102007 036 964
- US-A1- 2006 262 713
- Anonymous: "C-37P Variable-directivity condenser microphone", SONY , 19. März 2008 (2008-03-19), Seiten 1-9, XP002640370, Gefunden im Internet: URL:http://www.coutant.org/sonyscan/c-37p. pdf [gefunden am 2011-06-07]

## Beschreibung

Die Erfindung bezieht sich auf eine Vorrichtung zur Bereitstellung einer eigensicheren Versorgungsspannung und zur Übertragung von Kommunikationssignalen zwischen wenigstens zwei Teilnehmern eines Kommunikationsnetzwerks.

In der Prozessautomatisierungstechnik werden Geräte, insb. Messgeräte, oftmals an Orten eingesetzt, an denen die Gefahr einer Explosion besteht. An Geräte, die in explosionsgefährdeten Bereichen eingesetzt sind, werden besondere Sicherheitsanforderungen gestellt. Diese Sicherheitsanforderungen haben das Ziel eine Funkenbildung, die ggf. eine Explosion auslösen könnte, zu vermeiden.

So ist gemäß der Europäischen Norm EN 50 020 Explosionsschutz gegeben, wenn Geräte gemäß der darin definierten Schutzklasse "Eigensicherheit" (Exi) ausgebildet sind. Gemäß dieser Schutzklasse haben die Werte für die elektrischen Größen Strom, Spannung und Leistung in einem Gerät zu jeder Zeit jeweils unterhalb eines vorgegebenen Grenzwertes zu liegen. Die drei Grenzwerte sind so gewählt, dass im Fehlerfall, die maximal zur Verfügung stehende Energie nicht ausreicht, um einen Zündfunken zu erzeugen. Der Strom wird z.B. durch Widerstände, die Spannung z.B. durch Zener-Dioden und die Leistung durch entsprechende Kombinationen von strom- und spannungsbegrenzenden Bauteilen unter den vorgegebenen Grenzwerten gehalten. In der vorgenannten Europäischen Norm werden weitere bekannte Schutzklassen, d.h. Ex-e, Ex-d etc., beschrieben.

Weiterhin ist aus der Offenlegungsschrift DE 4344071 A1 ein Übertragungssystem für explosionsgefährdete Bereiche bekannt geworden, bei dem das Bussystem eigensicher und explosionsgeschützt ausgeführt ist. Auch aus der EP 0666631 A2 ist ein Speisesystem für einen Feldbus in explosionsgefährdeten verfahrenstechnischen Anlagen bekannt geworden, bei dem Energie und Daten über dasselbe Adempaar übertragen werden. Dabei ist eines der Begrenzungsmittel in einem Verteiler unmittelbar vor den Anschlüssen für die Verbraucher angeordnet.

Des weiteren ist ein ähnliches System aus US 2006/262713 bekannt.

Die bekannten Mittel um ein Kommunikationsnetzwerk bzw. dessen Teilnehmer eigensicher auszulegen, sind aber umfangreich und benötigen ausser den Kommunikationsleitungen weitere Leitungen zur Energieversorgung oder zusätzliche Schaltungen zur Begrenzung der maximal übertragbaren Leistung

Aus dem Stand der Technik ist zudem ein Mikrophon bzw. ein Mikrophonkabel bekannt geworden, bei dem ein Versorgungsstrom über einen Mittelabgriff eines Transformators zur Energieversorgung gegeben wird, symmetrisch über ein Leitungspaar übertragen wird, und die so erzeugte Spannung dann an einem Mittelabgriff eines zu dem Mikrophon gehörenden Transformators abgegriffen wird, vgl. http://www.coutant.org/sonyscan/c-37p.pdf.

Der Erfindung liegt daher die Aufgabe zugrunde, eine einfachere eigensichere Spannungsversorgung eines Teilnehmers eines Kommunikationsnetzwerks vorzuschlagen.

Die Aufgabe wird erfindungsgemäß durch den unabhängigen Anspruch 1 gelöst. Vorteilhafte Ausgestaltungen sind in den Unteransprüchen angegeben.

Gemäß dem unabhängigen Anspruch 1 wird die Aufgabe durch eine Vorrichtung zur Bereitstellung einer eigensicheren Versorgungsspannung und zur Übertragung von Kommunikationssignalen zwischen wenigstens zwei Teilnehmern eines Kommunikationsnetzwerks, gelöst, wobei der erste Teilnehmer über eine erste Betriebselelrkronik und der zweite Teilnehmer über eine zweite Betriebselektronik verfügt, wobei der erste und der zweite Teilnehmer insbesondere ausschließlich über ein erstes Paar und ein zweites Paar von Signaladern miteinander verbunden sind, wobei der erste Teilnehmer über ein erstes und ein viertes induktives Koppelelement verfügt,
wobei der erste Teilnehmer über das erste Koppelelement, das zum Senden und/oder Empfangen von Kommunikationssignalen an den zweiten Teilnehmer dient, mit dem ersten Paar von Signaladern verbunden ist,
wobei das erste Koppelelement zur galvanischen Trennung zwischen der ersten Betriebselektronik und dem ersten Paar von Signalleitungen dient, wobei das vierte Koppelelement zur galvanischen Trennung zwischen der ersten Betriebselektronik und dem zweiten Paar von Signalleitungen dient, wobei der zweite Teilnehmer über ein zweites und ein drittes Koppelelement verfügt,
wobei das zweite Koppelelement zur galvanischen Trennung zwischen der zweiten Betriebselektronik und dem ersten Paar von Signalleitungen dient, wobei das zweite Koppelelement mit dem ersten Paar von Signaladern verbunden ist und zum Senden und/oder Empfangen von über das erste Paar von Signaladern übertragenen Kommunikationssignalen dient,
wobei das dritte Koppelelement zur galvanischen Trennung zwischen der zweiten Betriebselektronik und dem zweiten Paar von Signalleitungen dient, wobei das dritte Koppelelement zum Senden und/oder Empfangen von Kommunikationssignalen über das zweite Paar von Signaladern an den ersten Teilnehmer dient,
wobei das vierte Koppelelement mit dem zweiten Paar von Signaladern verbunden ist, und zum Senden und/oder Empfangen der über das zweite Paar von Signaladern übertragenen Kommunikationssignale dient,
wobei eine Spannungsquelle vorgesehen ist, die einerseits an einen Mittelabgriff auf der Seite des ersten Koppelelements, welche mit dem ersten Paar von Signaladern verbunden ist und andererseits an einen Mittelabgriff auf der Seite des vierten Koppelelements, welche mit dem zweiten Paar von Signaladern verbunden ist, angeschlossen ist,
wobei über einen Mittelabgriff auf der Seite des zweiten Koppelelements, welche mit dem ersten Paar von Signaladern verbunden ist und an einem Mittelabgriff auf der Seite des dritten Koppelelements, welche mit dem zweiten Paar von Signaladern, verbunden ist, ein Abgriff der Versorgungsspannung für den zweiten Teilnehmer erfolgt,
wobei die von der Spannungsquelle eingespeiste Spannung und/oder die abgegriffene Versorgungsspannung derart begrenzt ist, dass sie den Anforderungen an die Eigensicherheit genügt.

Es ist eine Idee der vorliegenden Erfindung, eine Verbindung zwischen zwei Teilnehmern herzustellen, die miteinander kommunizieren, und bei der der erste Teilnehmer den zweiten Teilnehmer über die zur Signalübertragung verwendeten Signaladern zusätzlich mit einer Versorgungsspannung versorgt, wobei die in die Signaladem, d.h. das erste und das zweite Paar von Signaladern, eingespeiste Spannung bzw. die abgegriffene Versorgungsspannung, die dem zweiten Teilnehmer zur Verfügung gestellt wird, gemäß den Anforderungen an die Eigensicherheit Ex-i begrenzt ist. Zu diesem Zweck kann bspw. eine Spannungsquelle mit einer maximalen Spannungsabgabe vorgesehen sein, die die Anforderungen an die Schutzart Eigensicher Ex-i erfüllt.

Es kann sich bei der Vorrichtung gemäß dem unabhängigen Anspruch 1 bei dem ersten und dem zweiten Teilnehmer um zwei Geräteteile bspw. eines Messgerätes handeln. Auch bei dem Kommunikationsnetzwerk kann es sich bevorzugt um ein Bussystem, insbesondere ein geräte-internes Bussystem, handeln. Bevorzugt handelt es sich auch hier bei dem Kommunikationsnetzwerk um ein gemäß dem RS485-Standard arbeitendes Bussystem.

In einer Ausgestaltung der Vorrichtung gemäß dem unabhängigen Anspruch 1 dienen das erste Paar und das zweite Paar von Signaladern zum Übertragen der Kommunikationssignale in einem Vollduplex-Betrieb. Die zwei Paare von Signaladern können als unabhängige Kanäle zur Übertragung von Kommunikationssignalen verwendet werden, so dass bspw. das erste Paar von Signaladern zur Übertragung von Kommunikationssignalen von dem ersten Teilnehmer an den zweiten Teilnehmer und das zweite Paar von Signaladem zur Übertragung von Kommunikationssignalen von dem zweiten Teilnehmer an den ersten Teilnehmer dient. Das erste und das zweite Paar von Signaladern können aber alternativ auch als redundante voneinander unabhängige Übertagungskanäle in die gleiche Richtung, bspw. zum Übertragen von Signalen von dem ersten Teilnehmer an den zweiten Teilnehmer oder umgekehrt, dienen.

In einer weiteren Ausgestaltung der Vorrichtung gemäß dem unabhängigen Anspruch 1 erfolgt die Energieversorgung des zweiten Teilnehmers ausschließlich durch die abgegriffene Versorgungsspannung. Zur Übertragung der Versorgungsspannung sind also das erste und das zweite Paar von Signaladern vorgesehen. Durch Herstellen einer Potentialdifferenz zwischen dem ersten und dem zweien Paar von Signaladem, vermittels der Spannungsquelle, kann eine Versorgungsspannung an dem Mittelabgriff des zweiten und dritten Koppelelements zur Verfügung gestellt werden. Gleichzeit zu der Versorgungsspannung, die bspw. 15 V beträgt, können auch Kommunikationssignale, die bspw. mit ±3 V Kommunikationsspannung auf die Versorgungsspannung aufmoduliert sind, zwischen dem ersten und dem zweiten Teilnehmer ausgetauscht werden. Entsprechend der Ausgestaltung der Erfindung mit nur einem Paar von Signaladern können die Kommunikationssignale auch hier manchester-codiert, d.h. mittelwertfrei, sein. Bei dem ersten, zweiten, dritten und/oder vierten Koppelelement kann es sich entsprechend dem unabhängigen Anspruch 1 um einen Übertrager oder um einen Transformator handeln.

Ferner kann_wenigstens eines der induktiven Koppelelemente insbesondere sowohl das erste, das zweite, das dritte und/oder das vierte induktive Koppelelement entsprechend den Ex-i-Vorschriften, insbesondere entsprechend den in dem Ex-i-Standard festgelegten Abstands- und Isolationsanforderungen, ausgelegt werden. Werden das erste und das zweite bzw. das dritte und das vierte Koppelelement und das erste und das zweite Paar von Signaladern derart ausgelegt, kann dadurch die Verbindung zwischen den beiden Teilnehmern und/oder die gesamte Vorrichtung gemäß dem unabhängigen Anspruch 1 in einem explosionsgefährdeten Bereich und gemäß der Schutzart Ex-i ausgelegt werden.

Alternativ können auch nur das erste und das vierte bzw. das zweite und das dritte Koppelelemente gemäß den Ex-i Anforderungen ausgelegt werden, damit der jeweilige Teilnehmer gemäß den Ex-i Anforderungen ausgelegt ist. Wird z.B. die Betriebselektronik des ersten Teilnehmers entsprechend den Vorschriften bzgl. der Eigensicherheit Ex-i ausgelegt und ist auch das erste und das vierte Koppelelement gemäß diesen Vorschriften ausgelegt, so ist der erste Teilnehmer entsprechend den Anforderungen an die Eigensicherheit ausgelegt. Sind die Signaladern, d.h. das erst Paar und das zweite Paar von Signaladern, dann auch entsprechend den Anforderungen an die Eigensicherheit ausgelegt bspw. isoliert, und ist auch das zweite und das dritte Koppelelement entsprechend den Anforderungen an die Eigensicherheit ausgelegt, so ist der erste Teilnehmer samt den zugehörigen Verbindungsleitungen, d.h. dem zugehörigen ggf. isolierten ersten und zweiten Paar von Signaladern, entsprechend den Anforderungen an die Eigensicherheit ausgelegt. Die Verbindungsstrecke zwischen dem ersten und dem zweiten Teilnehmer Ist dann entsprechend der Schutzart Elgensicher Ex-i ausgelegt. Dies kann in einer industriellen Prozessanlage von fundamentalter Bedeutung sein.

Gleiches gilt dann bei entsprechenden Vorkehrungen für den zweiten Teilnehmer. Wird also z.B. die Betriebselektronik des zweiten Teilnehmers entsprechend den Vorschriften bzgl. der Eigensicherheit Ex-i ausgelegt und ist auch das zweite und das dritte Koppelelement gemäß diesen Vorschriften ausgelegt, so ist der zweite Teilnehmer entsprechend den Anforderungen an die Eigensicherheit Ex-i ausgelegt. Sind die Signaladern, d.h. das erste und das zweite Paar von Signaladern, wie erwähnt, dann auch entsprechend den Anforderungen an die Eigensicherheit ausgelegt bspw. isoliert, und ist das erste und das vierte Koppelelement auch entsprechend den Anforderungen an die Eigensicherheit ausgelegt, so ist der zweite Teilnehmer samt den zugehörigen Verbindungsleitungen, d.h. den zugehörigen isolierten Signaladern, entsprechend den Anforderungen an die Eigensicherheit ausgelegt.

Ist nun neben dem ersten, zweite, dritten und vierten Koppelelement, die Betriebselektronik des ersten und des zweiten Teilnehmers sowie die Signaladern, d.h. das erste und das zweite paar von Signaladern, entsprechend den Anforderungen an die Eigensicherheit Ex-i ausgelegt, so ist die gesamte Vorrichtung gemäß dem unabhängigen Anspruch 1 entsprechend den Anforderungen an die Eigensicherheit Ex-i ausgelegt.

Andererseits ist es auch möglich lediglich das erste, das zweite, das dritte und das vierte Koppelelement sowie die Signaladern, d.h. das erste und das zweite Paar von Signaladern, gemäß den Anforderungen an die Eigensicherheit Ex-i auszulegen, während z.B. die Betriebselektronik des ersten und des zweiten Teilnehmers nicht entsprechend diesen Anforderungen ausgelegt sind. Dann ist zumindest die Verbindung bzw. die Verbindungsstrecke zwischen dem ersten und den zweiten Teilnehmer gemäß den Anforderungen an die Schutzart Eigensicher Ex-i ausgelegt. Sind der erste Teilnehmer und der zweite Teilnehmer in unterschiedlichen Gehäusen untergebracht, so besteht dann die Möglichkeit, bspw. das Gehäuse des ersten und/oder des zweiten Teilnehmers z.B. gemäß den Anforderungen an die Schutzart Ex-d, d.h. druckfest, auszugestalten, während die erste und/oder die zweite Betriebselektronik nicht gemäß der Schutzart Elgensicher Ex-i ausgelegt sind, Jedoch das erste, das zweite, das dritte und das vierte Koppelelement sowie die Signaladern, d.h. das erste und das zweite Paar von Signaladern entsprechend der Schutzart Eigensicher Ex-i ausgelegt sind.

Bei dem ersten und dem zweiten Teilnehmer kann es sich gemäß dem unabhängigen Anspruch 1 bspw. auch um einen ersten Geräteteil und einen zweiten Geräteteil bspw. eines Feldgerätes und insbesondere Messgerätes handeln. Bspw. kann es sich um ein Messgerät, bei dem bspw. Messverstärker und Transmitter separat ausgeführt sind, oder aber auch um verschiedene Geräte, insbesondere Messgeräte, handeln. Ein Messgerät bei dem Transmitter und Messverstärker voneinander abgesetzt sind, verfügt bspw. über einen ersten Geräteteil und einen zweiten Geräteteil, wobei der erste Geräteteil über die Spannungsquelle verfügt und über diese Spannungsquelle den zweiten Geräteteil, der als Verbraucher fungiert, mit einer Versorgungsspannung versorgt. Bei dem ersten Geräteteil kann es sich bspw. um den Transmitter und bei dem zweiten Geräteteil um den Messverstärker handeln. Andererseits kann es sich bei dem ersten Geräteteil um den Messverstärker und bei dem zweiten Geräteteil um den Transmitter handeln. Der erste und der zweite Geräteteil bzw. Messverstärker und Transmitter können dazu in unterschiedlichen Gehäusen untergebracht sein und bspw. über das erste und das zweite Paar von Signaladem miteinander verbunden sein.

Die Erfindung wird anhand der nachfolgenden Zeichnungen näher erläutert, Es zeigt:
Fig. 1: eine schematische Darstellung einer Ausgestaltung der vorgeschlagenen Vorrichtung im Halbduplex-Betrieb,
Fig. 2: eine schematische Darstellung einer weiteren Ausgestaltung der vorgeschlagenen Vorrichtung im Vollduplex-Betrieb,

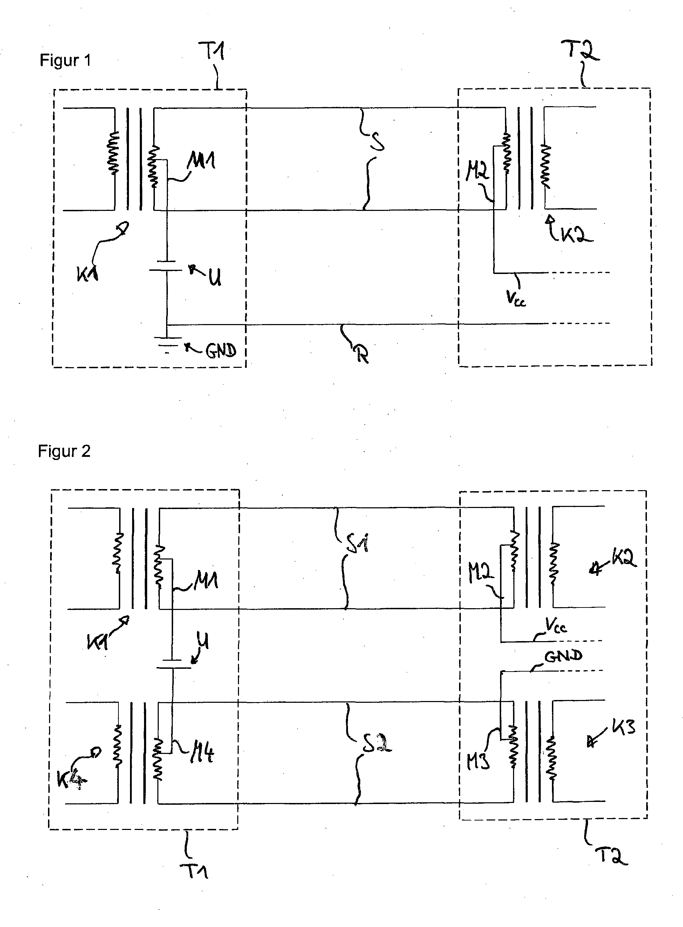

Figur 1 zeigt eine Vorrichtung zum eigensicheren Übertragen von Kommunikationssignalen und einer Versorgungsspannung zwischen einem ersten und einem zweiten Teilnehmer, hier zwei Geräteteilen T1, T2. Die Kommunikation findet dabei im sog. Halbduplex-Betrieb statt. Dafür ist das erste Geräteteil T1 über ein Paar von Signaladem S mit dem zweiten Geräteteil T2 verbunden. Weiterhin weist das erste Geräteteil T1 eine Verbindung zu einer Spannungsquelle U auf.

Die beiden Geräteteile T1, T2 sind galvanisch voneinander und von der Spannungsquelle U über induktive Koppelelemente K1, K2 getrennt Dabei ist die Betriebselektronik, nicht gezeigt, des ersten Geräteteils T1 über ein erstes induktives Koppelelement K1 von dem Signaladempaar S getrennt. Das erste induktive Koppelelement K1 weist eine Primärseite und eine Sekundärseite auf und ist primärseitig mit der Betriebselektronik und sekundärseitig mit dem Signaladernpaar S verbunden. Weiterhin ist das erste induktive Koppelelement K1 sekundärseitig über einen Mittelabgriff M1 mit der Spannungsquelle U verbunden. Bei der Spannungsquelle U handelt es sich um eine Gleichspannungsquelle. Die Spannungsquelle U weist zwei unterschiedlich gepolte Anschlüsse auf, wobei der erste Anschluss mit dem Mittelabgriff des ersten induktiven Koppelelements K1 und der zweite Anschluss mit einem Massepotential GND verbunden ist. Über das Paar von Signaladern S ist das erste Geräteteil T1 mit einem induktiven Koppelelement K2 des zweiten Geräteteils T2 verbunden. Auf der mit dem Paar von Signaladern S verbundenen Seite des zweiten induktiven Koppelelements K2 ist ein weiterer Mittelabgriff M2 vorgesehen, der zum Abgreifen einer Versorgungsspannung dient. Das an dem Mittelabgriff anliegende Potential wird zu diesem Zweck gegenüber dem Massepotential GND abgegegriffen und der Betriebselektronik, nicht gezeigt, des zweiten Geräteteils T2 zugeführt. Die zugeführte Versorgungsspannung ist dabei auf einen Wert unterhalb der durch die Schutzart Eigensicher liegenden Grenzwert beschränkt. Das erste und das zweite Induktive Koppelelement K1, K2 dienen dann bei der Übertragung der Kommunikationssignale wechselseitig als Sender und Empfänger.

Figur 2 zeigt eine schematische Darstellung einer vorgeschlagenen Vorrichtung für den Vollduplex-Betrieb. Dabei dient ein erstes Paar von Signaladern S1 über das ein erster und ein zweiter Geräteteil T1, T2 miteinander verbunden sind als erster Übertragungskanal und ein zweites Paar von Signaladern S2 über das der erste und der zweite Geräteteil T1, T2 miteinander verbunden sind als zweiter Übertragungskanal, so dass Kommunikationssignale im Voll-Duplex-Betrieb zwischen dem ersten und dem zweiten Teilnehmer T1, T2 übertragen werden können. Alternativ kann die in Figur 2 gezeigte Vorrichtung zur Übertragung von Signalen zwischen dem ersten und dem zweiten Geräteteil im redundanten Halb-Duplex-Betreib dienen. Dann wird über das erste und/oder über das zweite Paar von Signaladern für eine Übertragung von Kommunikationssignalen im HalbDuplex-Betreib verwendet.

Der erste Geräteteil T1 verfügt über zwei induktive Koppelelemente K1, K4 die jeweils über einen Mittelabgriff M1, M4 verfügen, welcher dazu dient, eine Spannung an den zweiten Geräteteil T2 zu übertragen. Dazu ist der Mittelabgriff M1 des ersten induktiven Koppelelements K1, das bspw. als Sendeteil dient, mit einer Spannungsquelle U verbunden. Der erste Mittelabgriff M1 ist mit einem Anschluss der Spannungsquelle U mit einer ersten Polarität, und der Mittelabgriff M4 des als Empfänger dienenden zweiten induktiven Koppelelements K4 ist mit einem Anschluss entgegengesetzter Polarität verbunden. Dadurch werden die beiden Paare von Signaladern S1, S2 auf unterschiedliche Potentiale gebracht. Der zweite Geräteteil T2 der ebenfalls über zwei induktive Kopplungselemente K2, K3 verfügt, die jeweils über das erste bzw. das zweite Paar von Signaladern S1, S2 mit einem induktiven Koppelelement K1, K4 des ersten Geräteteils T1 verbunden sind, kann dann über diese durch die Potentialdifferenz zwischen den beiden Paaren von Signaladern S1, S2 mit einer Versorgungsspannung versorgt werden. Dafür weisen die beiden induktiven Koppelelemente K2, K3 des zweiten Geräteteils T2 jeweils einen Mittelabgriff M2, M3 auf, der mit dem ersten bzw. mit dem zweiten Paar von Signaladern S1, S2 verbunden Seite auf. Die über diese Mittelabgriffe M2, M3 der induktiven Koppelelemente K2, K3 des zweiten Geräteteils T2 abgegriffene Versorgungsspannung kann der Betriebselektronik des zweiten Teilnehmers T2 zugeführt werden. Die Spannungsquelle U ist gemäß der Schutzart Eigensicher, d.h. Ex-i, ausgelegt, so dass die maximal zur Verfügung stehende Leistung einen Grenzwert nicht überschreitet. Die beiden Geräteteile können daher auch in explosionsgefährdeten Bereichen bspw. einer industriellen Anlage eingesetzt werden.

## Patentansprüche

1. Vorrichtung zur Bereitstellung einer eigensicheren Versorgungsspannung und zur Übertragung von Kommunikationssignalen zwischen wenigstens zwei Teilnehmern (T1, T2) eines Kommunikationsnetzwerks,
wobei der erste Teilnehmer (T1) über eine erste Betriebselektronik und der zweite Teilnehmer (T2) über eine zweite Betriebselektronik verfügen,
wobei der erste und der zweite Teilnehmer (T1, T2) insbesondere ausschließlich über ein erstes Paar und ein zweites Paar von Signaladern (S1, S2) miteinander verbunden sind,
wobei der erste Teilnehmer (T1) über ein erstes und ein viertes induktives Koppelelement (K1, K4) verfügt,
wobei der erste Teilnehmer (T1) über das erste Koppelelement (K1), das zum Senden und/oder Empfangen von Kommunikationssignalen an den zweiten Teilnehmer (T2) dient, mit dem ersten Paar von Signaladern (S1) verbunden ist,
wobei das erste Koppelelement (K1) zur galvanischen Trennung zwischen der ersten Betriebselektronik und dem ersten Paar von Signalleitungen (S1) dient, wobei das vierte Koppelelement (K4) zur galvanischen Trennung zwischen der ersten Betriebselektronik und dem zweiten Paar von Signaladern (S2) dient, wobei der zweite Teilnehmer (T2) über ein zweites und ein drittes Koppelelement (K2, K3) verfügt,
wobei das zweite Koppelelement (K2) zur galvanischen Trennung zwischen der zweiten Betriebselektronik und dem ersten Paar von Signaladern (S1) dient,
wobei das zweite Koppelelement (K2) mit dem ersten Paar von Signaladern (S1) verbunden ist und zum Senden und/oder Empfangen von über das erste Paar von Signaladern (S1) übertragenen Kommunikationssignalen dient, wobei das dritte Koppelelement (K3) zur galvanischen Trennung zwischen der zweiten Betriebselektronik und dem zweiten Paar von Signalleitungen (S2) dient,
wobei das dritte Koppelelement (K3) zum Senden und/oder Empfangen von Kommunikationssignalen über das zweite Paar von Signaladern (S2) an den ersten Teilnehmer (T1) dient,
wobei das vierte Koppelelement (K4) mit dem zweiten Paar von Signaladern (S2) verbunden ist, und zum Senden und/oder Empfangen der über das zweite Paar von Signaladern (S2) übertragenen Kommunikationssignale dient,
wobei eine Spannungsquelle (U) vorgesehen ist, die einerseits an einen Mittelabgriff (M1) auf der Seite des ersten Koppelelements, welche mit dem ersten Paar von Signaladern (S1) verbunden ist und andererseits an einen Mittelabgriff (M4) auf der Seite des vierten Koppelelements (K4), welche mit dem zweiten Paar von Signaladern (S2) verbunden ist, angeschlossen ist,
wobei über einen zweiten Mittelabgriff (M2) auf der Seite des zweiten Koppelelements (K2), welche mit dem ersten Paar von Signaladern (S1) verbunden ist und an einem dritten Mittelabgriff (M3) auf der Seite des dritten Koppelelements (K3), welche mit dem zweiten Paar von Signaladern (S1) verbunden ist, ein Abgriff der Versorgungsspannung für den zweiten Teilnehmer (T2) erfolgt,
wobei die von der Spannungsquelle (U) eingespeiste Spannung und/oder die abgegriffene Versorgungsspannung derart begrenzt ist, dass sie den Anforderungen an die Zündschutzart Eigensicherheit Ex-i genügt,
wobei zu diesem Zweck eine Spannungsquelle mit einer maximalen Spannungsabgabe vorgesehen ist, die die Anforderungen an die Schutzart Eigensicherheit Ex-i erfüllt,
oder wobei zwischen der Spannungsquelle und den entsprechenden Anschlüssen des ersten Teilnehmers eine Schaltung zur Strom-, Spannungs- und/oder Leistungsbegrenzung gem. der Schutzart Eigensicherheit Ex-i vorgesehen ist.

2. Vorrichtung nach dem vorherigen Anspruch,
**dadurch gekennzeichnet**,
wobei das erste Paar und das zweite Paar von Signaladern (S1, S2) zum Übertragen der Kommunikationssignale in einem Vollduplex-Betrieb dienen.

3. Vorrichtung nach einem der vorherigen Ansprüche,
**dadurch gekennzeichnet,**
**dass** die Energieversorgung des zweiten Teilnehmers (T2) ausschließlich durch die abgegriffene Versorgungsspannung erfolgt.

## Claims

1. Device for the provision of an intrinsically safe supply voltage and for the transmission of communication signals between at least two users (T1, T2) in a communication network, wherein the first user (T1) has a first operating electronics system and the second user (T2) has a second operating electronics system,
wherein the first and second users (T1, T2) are interconnected, in particular exclusively via a first pair and a second pair of signal wires (S1, S2),
wherein the first user (T1) has a first and a fourth inductive coupling element (K1, K4),
wherein the first user (T1) is connected to the first pair of signal wires (S1) via the first coupling element (K1) that is used to send and/or receive communication signals to and/or from the second user (T2),
wherein the first coupling element (K1) is designed for galvanic isolation between the first operating electronics system and the first pair of signal cables (S1),
wherein the fourth coupling element (K4) is designed for galvanic isolation between the first operating electronics system and the second pair of signal cables (S2),
wherein the second user (T2) has a second and a third coupling element (K2, K3),
wherein the second coupling element (K2) is designed for galvanic isolation between the second operating electronics system and the first pair of signal cables (S1),
wherein the second coupling element (K2) is connected to the first pair of signal wires (S1) and serves to send and/or receive communication signals transmitted via the first pair of signal wires (S1),
wherein the third coupling element (K3) is designed for galvanic isolation between the second operating electronics system and the second pair of signal cables (S2),
wherein the third coupling element (K3) is designed to send and/or receive communication signals to and from the first user (T1) via the second pair of signal wires (S2),
wherein the fourth coupling element (K4) is connected to the second pair of signal wires (S2) and is designed to send and/or receive communication signals transmitted via the second pair of signal wires (S2),
wherein a voltage source (U) is provided which is connected on one side to a center tap (M1) on the side of the first coupling element which is connected to the first pair of signal wires (S1), and on the other side to a center tap (M4) on the side of the fourth coupling element (K4), which is connected to the second pair of signal wires (S2),
wherein the supply voltage is tapped for the second user (T2) via a second center tap (M2) on the side of the second coupling element (K2) which is connected to the first pair of signal wires (S1) and at a third center tap (M3) on the side of the third coupling element (K3) which is connected to the second pair of signal wires (S1),
wherein the voltage fed in by the voltage source (U) and/or the supply voltage tapped is limited in such a way that it meets the requirements for Ex-i intrinsically safe type of protection,
wherein for this purpose a voltage source is provided with a maximum voltage output that meets the requirements of Ex-i intrinsically safe type of protection,
or wherein a circuit for current, voltage and/or power limitation in accordance with Ex-i intrinsically safe type of protection is provided between the voltage source and the corresponding terminals of the first user.

2. Device as claimed in the previous claim,
**characterized in that**
the first pair and the second pair of signal wires (S1, S2) are designed to transmit communication signals in full-duplex mode.

3. Device as claimed in one of the previous claims,
**characterized in that**
energy is exclusively provided to the second user (T2) through the supply voltage tapped.

## Revendications

1. Dispositif destiné à la mise à disposition d'une tension d'alimentation à sécurité intrinsèque et destiné à la transmission de signaux de communication entre au moins deux utilisateurs (T1, T2) d'un réseau de communication,
pour lequel le premier utilisateur (T1) dispose d'un premier circuit électronique de commande et le deuxième utilisateur (T2) d'un deuxième circuit électronique de commande,
pour lequel le premier et le deuxième utilisateur (T1, T2) sont reliés entre eux, notamment exclusivement au moyen d'une première paire et d'une deuxième paire de fils de signaux (S1, S2),
pour lequel le premier utilisateur (T1) dispose d'un premier et d'un quatrième élément de couplage inductif (K1, K4),
pour lequel le premier utilisateur (T1) est relié par l'intermédiaire du premier élément de couplage (K1), qui sert à l'émission et/ou à la réception de signaux de communication de et vers le deuxième utilisateur (T2) à l'aide d'une deuxième paire de fils de signaux (S1),
pour lequel le premier élément de couplage (K1) est destiné à la séparation galvanique entre le premier circuit électronique de commande et la première paire de fils de signaux (S1), pour lequel le quatrième élément de couplage (K4) est destiné à la séparation galvanique entre le premier circuit électronique de commande et la deuxième paire de signaux (S2), pour lequel le deuxième utilisateur (T2) dispose d'un deuxième et d'un troisième élément de couplage (K2, K3),
pour lequel le deuxième élément de couplage (K2) est destiné à la séparation galvanique entre le deuxième circuit électronique de commande et la première paire de fils de signaux (S1),
pour lequel le deuxième élément de couplage (K2) est relié avec la première paire de fils de signaux (S1) et est destiné à l'émission et/ou la réception de signaux de communication transmis par l'intermédiaire de la première paire de fils de signaux (S1),
pour lequel le troisième élément de couplage (K3) est destiné à la séparation galvanique entre le deuxième circuit électronique de commande et la deuxième paire de fils de signaux (S2),
pour lequel le troisième élément de couplage (K3) est destiné à l'émission et/ou la réception de signaux de communication par l'intermédiaire de la deuxième paire de fils de signaux (S2) de et vers le premier utilisateur (T1),
pour lequel le quatrième élément de couplage (K4) est relié avec la deuxième paire de fils de signaux (S2) et est destiné à l'émission et/ou la réception des signaux de communication transmis par l'intermédiaire de la deuxième paire de fils de signaux (S2), pour lequel est prévue une source de tension (U), laquelle est, d'une part, raccordée à un point de prélèvement médian (M1) situé du côté du premier élément de couplage (K1), lequel est relié avec la première paire de fils de signaux (S1) et, d'autre part,
raccordée à un point de prélèvement médian (M4) situé du côté du deuxième élément de couplage (K4), lequel est relié avec la deuxième paire de fils de signaux (S2), pour lequel est réalisé un prélèvement de la tension d'alimentation pour le deuxième utilisateur (T2) par l'intermédiaire d'un deuxième point de prélèvement (M2) situé sur le côté du deuxième élément de couplage (K2), lequel est relié avec la deuxième paire de fils de signaux (S1),
pour lequel la tension injectée par la source de tension (U) et/ou la tension d'alimentation prélevée sont limitées de telle manière à satisfaire aux exigences relatives au mode de protection antidéflagrant à sécurité intrinsèque Ex-i, pour lequel est prévue à cette fin une source de tension générant une tension maximale, qui satisfait aux exigences relatives au mode de protection à sécurité intrinsèque Ex-i,
ou pour lequel est prévu entre la source de tension et les connexions correspondantes du premier utilisateur un circuit destiné à la limitation de courant, de tension et/ou de puissance conformément au mode de protection à sécurité intrinsèque Ex-i.

2. Dispositif selon la revendication précédente,
**caractérisé en ce**
**que** la première paire et la deuxième paire de fils de signaux (S1, S2) sont destinées à la transmission des signaux de communication dans un mode duplex intégral.

3. Dispositif selon l'une des revendications précédentes,
**caractérisé en ce**
**que** l'alimentation en énergie du deuxième utilisateur (T2) est réalisée exclusivement par la tension d'alimentation prélevée.
